# EUROPEAN PATENT APPLICATION

(11) **EP 4 832 501 A2**
(43) Date of publication of application: **28.10.2026**
(21) Application number: 26198281.3
(22) Date of filing: 07.08.2025
(51) Int. Cl.: H04N 23/695

(54) **INFORMATION PROCESSING DEVICE, METHOD, AND RECORDING MEDIUM**

(30) Priority: 30.08.2024 JP 2024148135
(62) Document number(s) of the earlier application(s) in accordance with Art. 76 EPC: 25194527.5 / 4 704 434
(71) Applicant: Canon Kabushiki Kaisha, Tokyo 146-8501 (JP)
(72) Inventor: KOSUGE, Akira, Ohta-ku, Tokyo, 146-8501 (JP); KOMIYAMA, Tomoaki, Ohta-ku, Tokyo, 146-8501 (JP); KATO, Fumihiko, Ohta-ku, Tokyo, 146-8501 (JP)
(74) Representative: TBK

(57) **Abstract**

An information processing device (1) includes setting means (213) for setting plural tracking targets (402) to be tracked during image capturing by image capturing means (100), size detection means for detecting sizes of the tracking targets in an image captured by the image capturing means, and control means for controlling zooming of the image capturing means such that the plural tracking targets are included within an angle of view of the image capturing means. The control means controls the zooming such that the size of each tracking target among at least some of the plural tracking targets falls within a predetermined range.

## Description

### TECHNICAL FIELD

The present disclosure relates to an information processing device, a method, and a recording medium.

### BACKGROUND

In the related art, there has been a technology of detecting a tracking target, which is a subject determined as an image capturing target to be tracked, from an image generated on the basis of image capturing by an image capturing unit, tracking the detected tracking target, and capturing an image of it. In addition, there is also a technology of retaining the size of a tracking target in an image within a prescribed range even if the tracking target moves in an image capturing optical axis direction of an image capturing unit by controlling zooming based on the size of the tracking target in an image if the image capturing unit is subjected to zooming in order to capture an image of the tracking target. Japanese Patent Laid-Open No. 2020-112648 discloses a method for continuing image capturing for tracking while retaining an appropriate size of a tracking target in an image by measuring the size of the tracking target in the image and changing a zoom magnification such that the measured size does not exceed a desired size. In addition, JP 2020 052400 A discloses a zoom control device and method and JP 2012 015666 A discloses an imaging apparatus capable of recording a moving image. Moreover, "Clutch-Free Panning and Integrated Pan-Zoom Control on Touch-Sensitive Surfaces: The CycloStar Approach" by Sylvain Malacria et. al discloses a zoom control technique for touchscreens.

### SUMMARY

However, Japanese Patent Laid-Open No. 2020-112648 takes all of a plurality of subjects as tracking targets and does not mention operations for capturing them within an angle of view.

The present disclosure is directed to control an image capturing unit such that a plurality of detected tracking targets are included within an angle of view of the image capturing unit while the image capturing unit is caused to track each of the plurality of tracking targets.

The present disclosure in its first aspect provides an information processing device as specified in claim 1. Optional features are specified in claims 2 to 16.

The present disclosure in its second aspect provides a method for controlling an information processing device as specified in claim 17.

The present disclosure in its third aspect provides a recording medium as specified in claim 18.

According to the present disclosure, it is possible to control an image capturing unit such that a plurality of detected tracking targets are included within an angle of view of the image capturing unit while the image capturing unit is caused to track each of the plurality of tracking targets.

Features of the present disclosure will become apparent from the following description of embodiments with reference to the attached drawings. The following description of embodiments is described by way of example.

### BRIEF DESCRIPTION OF THE DRAWINGS

FIG. 1 is an overall constitution diagram of an image capturing system.
FIG. 2 is a view showing a hardware constitution of a camera and a hardware constitution of a controller.
FIG. 3A is a view showing a functional constitution of the camera, and FIG. 3B is a view showing a functional constitution of the controller.
FIGS. 4A to 4D are views showing a relationship between a captured image and an index calculated by a calculation unit of the camera.
FIG. 5 is a sequence diagram showing a flow from when the camera transmits the captured image to the controller until tracking targets are set in the camera.
FIG. 6 is a flowchart showing a flow of tracking processing.
FIG. 7 is a flowchart showing a flow of determination processing.
FIG. 8 is a flowchart showing another flow of the tracking processing.
FIG. 9 is a flowchart showing another flow of the determination processing.
FIG. 10 is an explanatory view of a relationship between regions where tracking targets are positioned in the captured image and a restriction on zooming-in by the camera.
FIGS. 11A to 11C are explanatory views of a relationship between the presence or absence of detection of the tracking targets in the captured image by a detection unit and a restriction on zooming by the camera.
FIG. 12 is a flowchart showing another flow of the tracking processing.

### DESCRIPTION OF THE EMBODIMENTS

### First Embodiment

Hereinafter, embodiments of the present disclosure will be described with reference to the drawings.

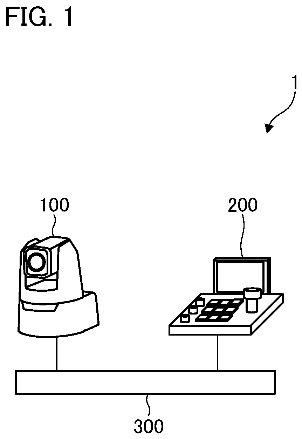

FIG. 1 is an overall constitution diagram of an image capturing system 1. The image capturing system 1 is a system detecting a plurality of tracking targets, tracking the plurality of detected tracking targets, and capturing an image of them. The tracking targets are subjects predetermined as targets for tracking by an image capturing unit. The tracking targets include human beings and the like. In the present embodiment, it is assumed that a plurality of subjects are all desirably set as tracking targets. In this case, the image capturing unit is required to perform an operation of zooming or the like such that a plurality of tracking targets are included within the angle of view of the image capturing unit. However, in consideration of only causing a plurality of tracking targets to be included within the angle of view of the image capturing unit, there is concern that it may be difficult to track each of a plurality of tracking targets, for example, there may be undetected tracking targets due to their excessively small size in an image. Hence, in the present embodiment, if tracking conditions are not satisfied, tracking of a plurality of tracking targets is realized by restricting image capturing control.

The image capturing system 1 includes a camera 100 and a controller 200. The camera 100 and the controller 200 are connected via a network 300.

The camera 100, which is an example of the image capturing unit, generates an image through image capturing, detects a plurality of tracking targets from the generated image, and operates so as to track the plurality of detected tracking targets and capture an image of them. Operations performed by the camera 100 include operations of panning, tilting, zooming, and the like. In addition, the zooming as an operation performed by the camera 100 includes zooming-in and zooming-out. Hereinafter, an image generated by image capturing with the camera 100 may be referred to as a captured image. In addition, the camera 100 can also be regarded as an information processing device.

The controller 200, which is an example of the information processing device, controls the camera 100. The controller 200 of the present embodiment acquires the captured image and detection results of subjects shown in the captured image by the camera 100 from the camera 100 and displays the acquired information, thereby receiving a user's selection of which subjects to be set as tracking targets. In addition, the controller 200 sets the selected subjects as tracking targets and transmits information indicating the set tracking targets to the camera 100.

The camera 100 and the controller 200 may be constituted of a single computer or may be realized by distributed processing using a plurality of computers.

For example, the network 300 is realized by a local area network (LAN) such as the Internet, a wide area network (WAN), or the like. In addition, the network 300 may be realized not only by the Internet but also by any one or a combination of a telephone line, a dedicated digital line, an asynchronous transfer mode (ATM), a frame relay line, a cable TV line, a data broadcasting radio line, and the like.

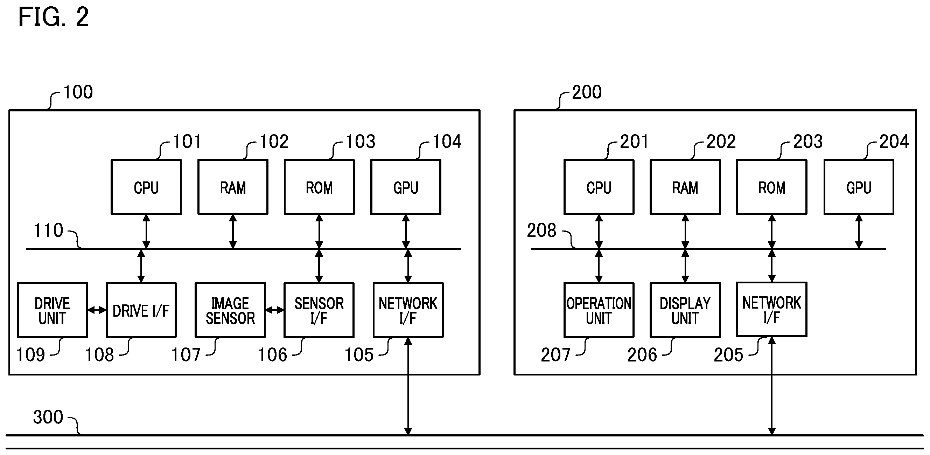

FIG. 2 is a view showing a hardware constitution of the camera 100 and a hardware constitution of the controller 200.

The camera 100 has a CPU 101, a RAM 102, a ROM 103, a GPU 104, a network I/F 105, a sensor I/F 106, an image sensor 107, a drive I/F 108, and a drive unit 109. The CPU 101, the RAM 102, the ROM 103, the GPU 104, the network I/F 105, the sensor I/F 106, the image sensor 107, the drive I/F 108, and the drive unit 109 are connected to each other via a bus 110.

The CPU 101 controls the camera 100 in its entirety by executing various processing using a computer program and data stored in the RAM 102. The RAM 102 is a high-speed storage device such as a DRAM and stores a computer program loaded from the ROM 103, captured images, and various information such as information acquired from the controller 200. In addition, the RAM 102 has a work domain used when the CPU 101 or the GPU 104 executes various processing. The ROM 103 is a non-volatile storage device such as a flash memory, an HDD, an SSD, or an SD card and stores setting data for the camera 100, and a computer program, data, and the like related to startup and basic operations of the camera 100. In addition, the ROM 103 also stores a computer program and data for causing the CPU 101 or the GPU 104 to execute or control various processing which will be described as processing performed by the camera 100. The GPU 104 performs inference processing for estimating the presence or absence of subjects from the captured image, regions of the subjects, or the like. For example, the GPU 104 is a computing device such as a graphics processing unit (GPU) specialized in image processing or inference processing. Instead of the GPU 104, a computing device such as a field programmable gate array (FPGA) may be used. In addition, the CPU 101 may take charge of processing of the GPU 104. The network I/F 105 is an interface for connection to the network 300 and communicates with an external device such as the controller 200 via a communication medium such as Ethernet (registered trademark). The sensor I/F 106 converts a video signal output from the image sensor 107 into the captured image, which is data in a prescribed format, and outputs the converted captured image to the RAM 102 after compressing it as necessary. The sensor I/F 106 may perform image quality adjustment such as color correction, exposure correction, or sharpness correction with respect to a video image expressed by a video signal acquired from the image sensor 107, or various processing such as cropping processing of cutting out only a prescribed region. In addition, the sensor I/F 106 may perform the processing in accordance with an instruction received from the controller 200 via the network I/F 105. The image sensor 107 receives light reflected from a subject, converts the brightness and the color of the received light into electric charge, and outputs a video signal based on the result of conversion. Examples of the image sensor 107 include a photodiode, a charge coupled device (CCD) sensor, and a complementary metal oxide semiconductor (CMOS) sensor. The drive I/F 108 is an interface for transmitting and receiving signals of instructions such as control signals with respect to the drive unit 109. The drive unit 109 is a drive mechanism for changing the image capturing direction of the camera 100 and has a mechanical drive system and a motor (drive source), and the like. The drive unit 109 performs panning and tilting for changing the image capturing direction horizontally and vertically, and zooming for optically changing the angle of view of image capturing in accordance with instructions received from the CPU 101 via the drive I/F 108.

In addition, the controller 200 has a CPU 201, a RAM 202, a ROM 203, a GPU 204, a network I/F 205, a display unit 206, and an operation unit 207. The CPU 201, the RAM 202, the ROM 203, the GPU 204, the network I/F 205, the display unit 206, and the operation unit 207 are connected to each other via a bus 208.

The CPU 201 controls the controller 200 in its entirety by executing various processing using a computer program and data stored in the RAM 202. The RAM 202 is a high-speed storage device such as a DRAM. The RAM 202 stores a computer program and data loaded from the ROM 203, and various data acquired from the camera 100. In addition, the RAM 202 has a work domain used when the CPU 201 or the GPU 204 executes various processing. The ROM 203 is a non-volatile storage device such as a flash memory, an HDD, an SSD, or an SD card and stores setting data for the controller 200, and a computer program, data, and the like related to startup and basic operations of the controller 200. In addition, the ROM 203 stores a computer program and data for causing the CPU 201 or the GPU 204 to control various processing. The GPU 204 performs inference processing for estimating the presence or absence of subjects from the captured image, regions of the subjects, or the like. For example, the GPU 204 is a computing device such as a GPU specialized in image processing or inference processing. Instead of the GPU 204, a computing device such as an FPGA may be used. In addition, the CPU 201 may take charge of processing of the GPU 204. The network I/F 205 is an interface for connection to the network 300 and communicates with an external device such as the camera 100 via a communication medium such as Ethernet. The display unit 206 has a screen such as an LCD screen or a touch panel screen and displays the captured image acquired from the camera 100, a setting screen of the controller 200, and the like. Hereinafter, a constitution in which the display unit 206 has a touch panel screen will be described. In the image capturing system 1, instead of providing the display unit 206 in the controller 200, a display device (not shown) displaying information may be connected to the controller 200 and the display device may display the captured image or a setting screen of the controller 200. The operation unit 207 is a user interface receiving a user's operation with respect to the controller 200, which is a button, a dial, a joystick, or a touch panel, for example.

The controller 200 may be a personal computer (PC) having a mouse, a keyboard, and the like as the operation unit 207.

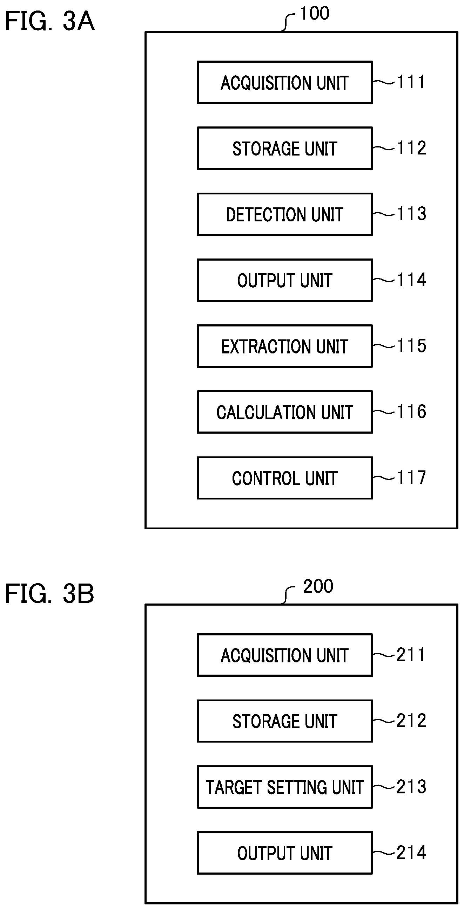

FIG. 3A is a view showing a functional constitution of the camera 100. The camera 100 has an acquisition unit 111, a storage unit 112, a detection unit 113, an output unit 114, an extraction unit 115, a calculation unit 116, and a control unit 117.

The acquisition unit 111 acquires information from the controller 200. The information acquired by the acquisition unit 111 includes information indicating subjects set as tracking targets, and the like.

The storage unit 112 stores information acquired by the acquisition unit 111 and information such as captured images generated by the camera 100.

The detection unit 113 detects subjects such as persons from the captured image, and detects regions of the subjects in the captured image. The regions of subjects in the captured image include sizes of the subjects in the captured image, lengths of the subjects in the captured image, positions of the subjects in the captured image, and the like. The detection unit 113 estimates subjects from an input captured image by performing inference processing with a learned model which has been created using a machine learning technique such as deep learning, and it outputs information indicating the coordinates corresponding to the regions of the subjects as a result. The coordinates corresponding to the regions of subjects include coordinates corresponding to regions of parts or all of the subjects in the captured image. In addition, the coordinates corresponding to parts of the subjects include coordinates corresponding to contours of the subjects, and coordinates corresponding to the heads or the faces of the subjects (persons). In addition, the coordinates corresponding to parts of the subjects include, in the case in which the detection unit 113 detects subjects as rectangles, coordinates of upper left vertices and lower right vertices of the rectangles, coordinates of the centers of the rectangles, coordinates corresponding to the width direction of the rectangles, and coordinates corresponding to the height direction of the rectangles. Here, the detection unit 113 can also be regarded as a size detection unit configured to detect sizes of the tracking targets in an image captured by the camera 100. In addition, the detection unit 113 can also be regarded as a subject detection unit configured to detect particular subjects from the captured image. Particular subjects include subjects of kinds predetermined as candidates for the tracking targets, such as persons. In addition, the detection unit 113 can also be regarded as a position detection unit configured to detect positions of the tracking targets in the captured image.

The technique of detecting subjects by the detection unit 113 is not limited to a technique based on machine learning. The detection unit 113 may use a template matching method in which a template image showing subjects which are detection targets is compared with the captured image and regions in the captured image which is highly similar to the subjects shown in the template image are detected as the regions showing the subjects. In addition, any technique may be adopted as the technique of detecting subjects by the detection unit 113. In addition, subjects which are detection targets by the detection unit 113 may be objects different from persons.

In addition, the detection unit 113 identifies each of detected subjects by detecting features of the detected subjects and generates information identifying the subjects for each of the identified subjects. The detection unit 113 outputs information indicating the feature quantity of the subjects as a result from an input captured image and the regions of the subjects in the captured image by performing inference processing with a learned model which has been created using a machine learning technique such as deep learning. The feature amounts extracted by the detection unit 113 may be feature amounts of all the subjects or may be feature amounts of parts of the subjects, such as the heads or the faces of persons. In addition, the feature amounts of the subjects include feature vectors in an image. In this case, captured images generated by image capturing from various angles for each subject may be used as images for learning, and for images showing the same subject, a machine learning model in which they are labeled with the same ID and input to a learning model and which outputs feature vectors may be used. Any learning model may be adopted as the learning model used for identifying subjects by the detection unit 113.

The technique of identifying subjects by the detection unit 113 is not limited to a technique based on machine learning. The detection unit 113 may predict regions of subjects in the latest captured image from transition of the regions of subjects in consecutive captured images in the past using a Kalman filter or the like, and identify the subjects closest to the predicted regions as the same subjects. In addition, any technique may be adopted as the technique of identifying subjects by the detection unit 113.

After information indicating the coordinates corresponding to the regions of subjects and information indicating the feature amounts of subjects are generated upon detection of subjects, the detection unit 113 causes the storage unit 112 to store the generated information. All the information indicating the coordinates corresponding to the regions of subjects and the information indicating the feature amounts of subjects generated by the detection unit 113 can also be regarded as detection results of subjects shown in the captured image by the detection unit 113.

The output unit 114 outputs information to the controller 200. The information output to the output unit 114 includes information indicating the captured image and the detection results of subjects shown in the captured image by the detection unit 113, and the like.

The extraction unit 115 extracts tracking targets from the captured image. The extraction unit 115 extracts tracking targets from information transmitted from the controller 200 as the information indicating subjects set as tracking targets, and the detection results by the detection unit 113 with respect to the captured image. In addition, if the captured image shows a plurality of tracking targets, the extraction unit 115 extracts all the tracking targets shown in the captured image. After the tracking targets are extracted, the extraction unit 115 causes the storage unit 112 to store information indicating which of subjects detected by the detection unit 113 are the tracking targets.

In addition, the extraction unit 115 determines tracking targets satisfying predetermined conditions regarding the size or the length from the extracted tracking targets. The extraction unit 115 determines the tracking target satisfying the predetermined conditions the detection results by the detection unit 113, such as the regions of the subjects in the captured image as the extracted tracking targets.

The calculation unit 116 regards a plurality of tracking targets extracted by the extraction unit 115 as a tracking target group, and calculates reference position of the tracking target group in the captured image and size of the tracking target group in the captured image. The calculation technique by the calculation unit 116 will be described below in detail.

The control unit 117, which is an example of a control unit, controls operations of panning, tilting, zooming, and the like by the drive unit 109 of the camera 100 (refer to FIG. 2). If the drive unit 109 is caused to perform zooming, the control unit 117 of the present embodiment controls zooming by the drive unit 109 such that the camera 100 can continue tracking each of the plurality of tracking targets extracted by the extraction unit 115. In other words, the control unit 117 causes the drive unit 109 to perform zooming, and if it is no longer possible for the camera 100 to continue tracking any of the plurality of tracking targets extracted by the extraction unit 115, the zooming is restricted (for example, the range of the angle of view taken by zooming control is restricted).

Each step of the processing performed by the acquisition unit 111, the detection unit 113, the output unit 114, the extraction unit 115, the calculation unit 116, and the control unit 117 of the camera 100 is realized by the CPU 101 or the GPU 104 loading a program stored in the ROM 103 into the RAM 102 and executing it. In addition, the storage unit 112 of the camera 100 is realized by the RAM 102 or the ROM 103.

FIG. 3B is a view showing a functional constitution of the controller 200. The controller 200 has an acquisition unit 211, a storage unit 212, a target setting unit 213, and an output unit 214.

The acquisition unit 211 acquires information from the camera 100. The information acquired by the acquisition unit 211 includes information indicating the captured image, the detection results with respect to the captured image by the detection unit 113 of the camera 100, and the like.

The storage unit 212 stores information acquired by the acquisition unit 211, and information generated by the controller 200.

The target setting unit 213 sets tracking targets. The target setting unit 213 causes the display unit 206 (refer to FIG. 2) of the controller 200 to display the captured image transmitted from the camera 100, information indicating subjects in the captured image detected by the detection unit 113, and the like. Further, the target setting unit 213 receives a selection of tracking targets by a user based on the information displayed by the display unit 206, and sets the subjects selected by the user as tracking targets. In addition, the target setting unit 213 generates information indicating which subjects have been set as tracking targets, and causes the storage unit 212 to store the generated information.

The output unit 214 outputs information to the camera 100 or the controller 200. The information output from the output unit 214 to the camera 100 includes information generated by the target setting unit 213 as the information indicating which subjects have been set as tracking targets, and the like. In addition, outputs of information to the controller 200 by the output unit 214 include display of an image to the display unit 206, and the like.

Each step of the processing performed by the acquisition unit 211, the target setting unit 213, and the output unit 214 of the controller 200 is realized by the CPU 201 or the GPU 204 loading a program stored in the ROM 203 into the RAM 202 and executing it. In addition, the storage unit 212 of the controller 200 is realized by the RAM 202 or the ROM 203.

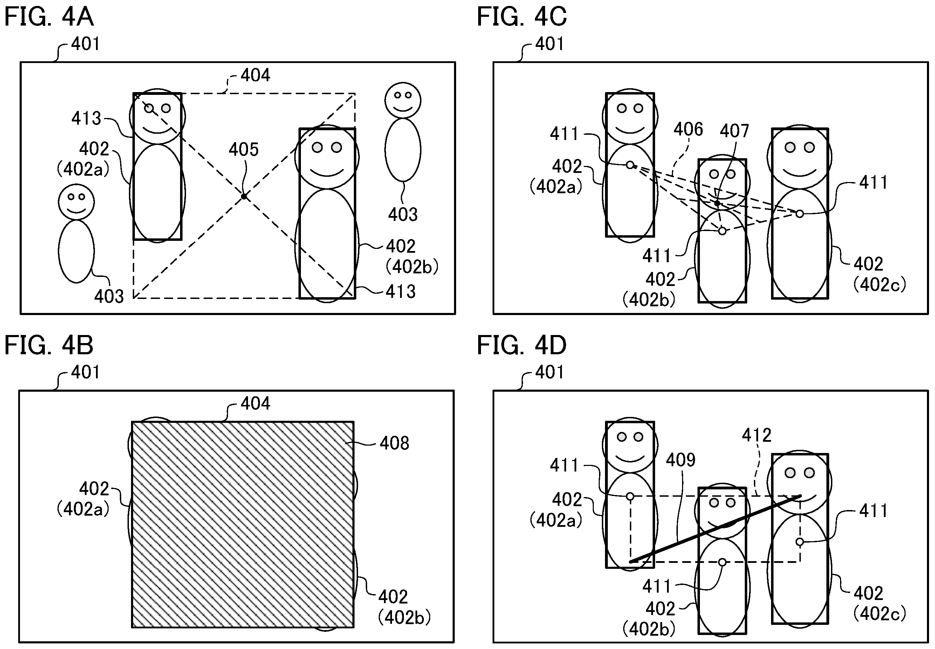

FIGS. 4A to 4D are views showing a relationship between the captured image and an index calculated by the calculation unit 116 of the camera 100.

FIG. 4A shows a captured image 401. In addition, the captured image 401 shows a plurality of tracking targets 402 constituted of a tracking target 402a and a tracking target 402b, and a plurality of non-tracking targets 403 none of which are tracking targets. Here, the plurality of tracking targets 402 constituted of the tracking target 402a and the tracking target 402b are the tracking target group.

In addition, in the captured image 401 shown in FIG. 4A, rectangular images 413 are shown respectively in the region superimposed on the tracking target 402a and the region superimposed on the tracking target 402b. The rectangular images 413 are rectangular-shaped images indicating the regions of the tracking targets 402 detected by the detection unit 113.

The calculation unit 116 calculates the reference position of the tracking target group from the captured image 401 shown in FIG. 4A. More specifically, the calculation unit 116 calculates a rectangular region 404 which is a rectangular-shaped region including the rectangular images 413 of the respective tracking targets 402, and calculates the center region in the calculated rectangular region 404 as a reference position 405 of the tracking target group.

In addition, as shown in FIG. 4B, the calculation unit 116 calculates a rectangle area 408, which is the area of the calculated rectangular region 404, as the size of the tracking target group.

The technique of calculating the reference position and the size of the tracking target group of the tracking target group by the calculation unit 116 is not limited to the foregoing example.

In the captured image 401 shown in FIG. 4C, the plurality of tracking targets 402 constituted of the tracking target 402a, the tracking target 402b, and a tracking target 402c, in other words, the tracking target group is shown. In addition, FIG. 4C shows the rectangular images 413 for respective tracking targets 402. In this case, the calculation unit 116 may calculate center regions 411 which are center regions of the regions surrounded by the rectangular images 413 for the respective rectangular images 413, and calculate the coordinates as the average value of the coordinates corresponding to each of the calculated center regions 411 as a reference position 407 of the tracking target group. In this case, the coordinates as the average value of the coordinates corresponding to each of the center regions 411 may be calculated from a weighted average of the coordinates corresponding to each of the center regions 411. In this manner, the reference position of the tracking target group becomes closer to a region in the tracking target group where more tracking targets are gathered. For this reason, in the case or the like in which the drive unit 109 of the camera 100 operates using the reference position of the tracking target group as a target position, it becomes possible to operate targeting on the region in the tracking target group where more tracking targets are gathered.

As in the example shown in FIG. 4C, if the number of tracking targets 402 constituting the tracking target group is three or larger, the coordinates corresponding to the region of the center of gravity of a polygon 406 having each of the center regions 411 as the vertex coincide with the coordinates as the average value of the coordinates corresponding to each of the center regions 411. For this reason, the coordinates corresponding to the region of the center of gravity of the polygon 406 may be calculated as the reference position 407 of the tracking target group.

In addition, if each of the center regions 411 has been calculated, as shown in FIG. 4D, the calculation unit 116 calculates a rectangular region 412 including each of the center regions 411. Further, the calculation unit 116 may calculate the larger one of the ratio of the length of the width of the rectangular region 412 to the length of the width of the captured image 401, and the ratio of the height of the rectangular region 412 to the height of the captured image 401 as the size of the tracking target group. Here, the width of the captured image 401 or the rectangular region 412 denotes the length in the lateral direction in the diagram. In addition, the height of the captured image 401 or the rectangular region 412 denotes the length in the vertical direction in the diagram. In the shown example, the ratio of the length of the width of the rectangular region 412 to the length of the width of the captured image 401 is larger than the ratio of the height of the rectangular region 412 to the height of the captured image 401. For this reason, the ratio of the length of the width of the rectangular region 412 to the length of the width of the captured image 401 becomes the size of the tracking target group. By determining the size of the tracking target group in this manner, operations of the drive unit 109 of the camera 100 can be controlled based on the size in a direction, of the lateral direction and the vertical direction in the captured image 401, in which the tracking target group spreads wider.

The calculation unit 116 may determine the ratio of a diagonal 409 in the rectangular region 412 to the diagonal of the outer frame in the captured image 401 as the size of the tracking target group. In addition, the calculation unit 116 may determine the length of the width, the height, or the length of the diagonal 409 in the rectangular region 412 as the size of the tracking target group.

In addition, the calculation unit 116 causes the storage unit 112 to store information indicating calculation results.

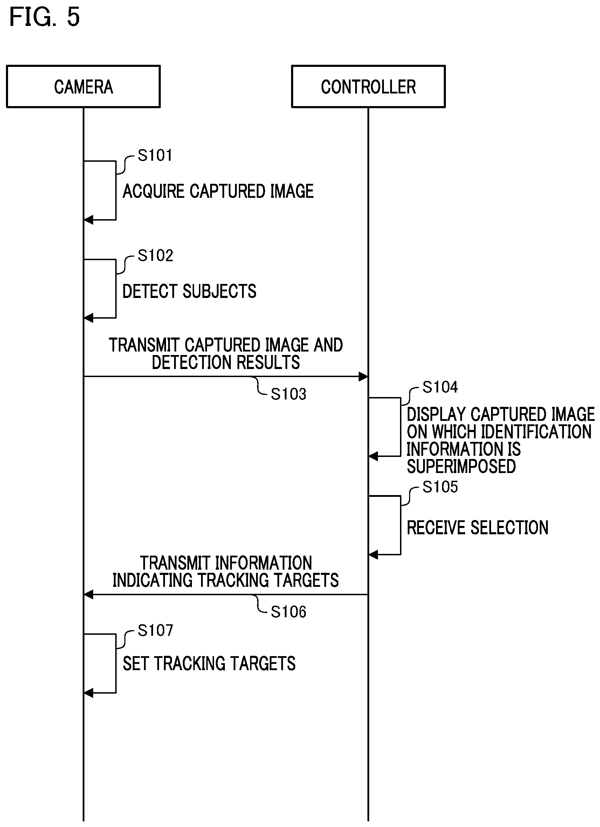

FIG. 5 is a sequence diagram showing a flow from when the camera 100 transmits the captured image to the controller 200 until tracking targets are set in the camera 100.

First, the acquisition unit 111 of the camera 100 acquires the captured image generated by image capturing (Step (which may hereinafter be referred to as "S") 101). The captured image acquired by the acquisition unit 111 is stored in the storage unit 112.

The detection unit 113 of the camera 100 detects the presence of subjects from the captured image acquired by the acquisition unit 111 and detects regions of the subjects in the captured image (Step S102). In addition, the detection unit 113 identifies the subjects by detecting features of the subjects and generates information identifying the subjects. The detection unit 113 causes the storage unit 112 to store information indicating detection results including the information identifying the subjects.

The output unit 114 of the camera 100 transmits the captured image acquired by the acquisition unit 111 and the information indicating the detection results by the detection unit 113 to the controller 200 (Step S103).

The output unit 214 of the controller 200 causes the display unit 206 to display the captured image transmitted from the camera 100 and the information identifying the subjects. More specifically, the output unit 214 causes the display unit 206 to display the captured image on which the information identifying the subjects is superimposed (Step S104).

The target setting unit 213 receives a user's selection of which subjects in the captured image displayed by the display unit 206 is to be the tracking targets (Step S105).

The target setting unit 213 transmits the information indicating the tracking targets selected by the user to the camera 100 via the output unit 214 (Step S106).

The extraction unit 115 of the camera 100 sets the tracking targets in accordance with the information transmitted from the controller 200 in Step S106 (Step S107). For this reason, the extraction unit 115 can also be regarded as a setting unit configured to set a plurality of tracking targets to be tracked during image capturing by the camera 100. In addition, the extraction unit 115 causes the storage unit 112 to store information indicating the set tracking targets.

The processing shown in FIG. 5 may be performed every time the camera 100 captures a new image and generates the captured image. Further, the setting of tracking targets in the camera 100 and the controller 200 may be updated every time tracking targets are selected by the user.

In addition, the foregoing example describes that subjects selected by the user are set as tracking targets, but examples of setting tracking targets are not limited to the foregoing example. For example, the target setting unit 213 may set all predetermined kinds of subjects detected from the captured image as tracking targets. The predetermined kinds include human beings and the like. In addition, after one tracking target is selected by the user, the target setting unit 213 may set subjects positioned near the one tracking target selected by the user in the captured image as tracking targets. In addition, the target setting unit 213 may set subjects having features similar to the one tracking target selected by the user in the captured image as tracking targets. In this manner, burden on the user for setting tracking targets is reduced compared to a case in which a user's selection is required for all tracking targets which are setting targets.

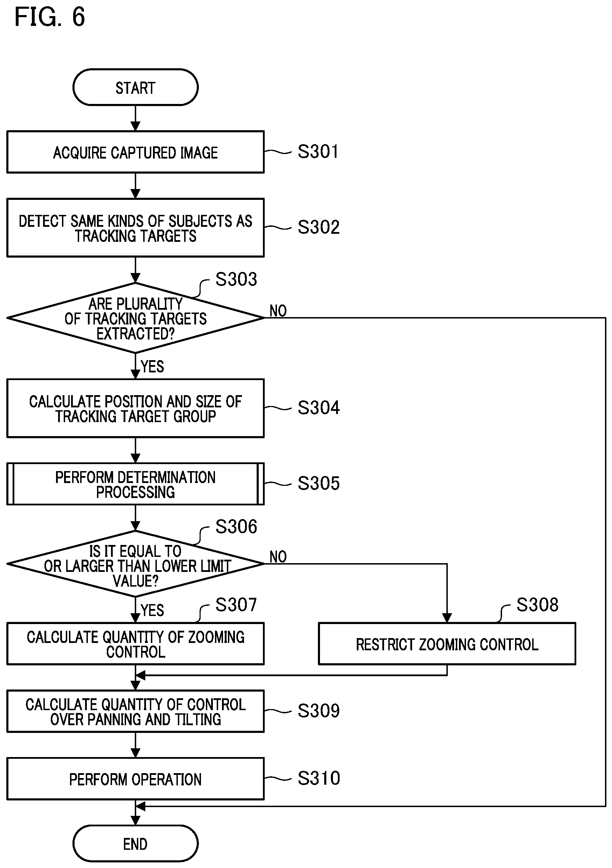

FIG. 6 is a flowchart showing a flow of tracking processing. The tracking processing is processing in which the camera 100 tracks the tracking target group having a plurality of tracking targets. In the present embodiment, in the case in which the camera 100 is set to a mode of tracking the tracking target group, if the captured image is generated by image capturing with the camera 100, the tracking processing starts.

The acquisition unit 111 of the camera 100 acquires the captured image generated by image capturing (Step S301).

The detection unit 113 of the camera 100 detects the same kinds of subjects as the tracking targets set in the extraction unit 115 from the captured image acquired by the acquisition unit 111 (Step S302). If the tracking targets set in the extraction unit 115 are human beings, the detection unit 113 detects human beings as subjects which are candidates for the tracking targets from the captured image. In this case, the detection unit 113 identifies the subjects by detecting the regions of the subjects and detecting the features of the subjects, thereby generating information identifying the subject.

The processing in Step S301 and Step S302 may be the same processing as Step S101 and Step S102 shown in FIG. 5. In addition, if the processing in Step S301 and Step S302 and the processing in Step S101 and Step S102 are the same processing with respect to the same captured image, the processing in Step S301 and Step S302 may be omitted.

The extraction unit 115 judges whether or not a plurality of tracking targets are extracted from the captured image (Step S303). The extraction unit 115 extracts the tracking targets from the captured image and performs judgment in Step S303 depending on whether or not the number of extracted tracking targets is more than one.

If the extraction unit 115 has extracted no tracking targets from the captured image, or if the number of tracking targets extracted by the extraction unit 115 is one (NO in Step S303), the tracking processing ends. Here, if the extraction unit 115 has extracted no tracking targets from the captured image, control of the drive unit 109 by the control unit 117 is not performed. In addition, if the number of tracking targets extracted by the extraction unit 115 is one, the control unit 117 causes the drive unit 109 to perform operations of panning, tilting, and zooming to track a single extracted tracking target.

In addition, if a plurality of tracking targets are extracted by the extraction unit 115 (YES in Step S303), the calculation unit 116 calculates the reference position and the size of the tracking target group (Step S304).

The extraction unit 115 performs determination processing (Step S305). Although details will be described below, in this determination processing, the extraction unit 115 determines the tracking target satisfying the predetermined conditions regarding the size or the length from the plurality of tracking targets extracted by the extraction unit 115 as a representative tracking target among the plurality of tracking targets. The representative tracking target determined in the determination processing may hereinafter be referred to as a representative target. In addition, in the determination processing, the extraction unit 115 determines the index as the size or the length of the representative target.

The control unit 117 judges whether or not the index determined in the determination processing as the size or the length of the representative target is equal to or larger than a threshold predetermined as a lower limit value (Step S306). For example, the control unit 117 may judge whether or not the length in the longitudinal direction of the rectangular image 413 (refer to FIG. 4A and the like) generated for the representative target is equal to or larger than the threshold as the lower limit value. In addition, for example, the control unit 117 may judge whether or not the area of the region surrounded by the rectangular image 413 generated for the representative target is equal to or larger than the threshold as the lower limit value. In addition, for example, the control unit 117 may judge whether or not the lengths of the diagonals connecting two vertices in the rectangular image 413 generated for the representative target is equal to or larger than the threshold as the lower limit value. That is, the index for the representative target used as the reference for judgment in Step S306 need only be an index allowing a comparison of the size or the length of the representative target.

In addition, for example, the threshold as the lower limit value is the smallest size or the shortest length at which the detection unit 113 can detect subjects from the captured image. In addition, for example, the threshold as the lower limit value may be a value obtained by adding a predetermined size or length to the smallest size or the shortest length at which the detection unit 113 can detect subjects from the captured image. The predetermined size or length may be any value, but it may be a value determined to be detectable by the detection unit 113. In addition, for example, the threshold as the lower limit value may be the smallest size or the shortest length at which the detection unit 113 can detect features of subjects from the captured image. In addition, for example, the threshold as the lower limit value may be a value obtained by adding a predetermined size or length to the smallest size or the shortest length at which the detection unit 113 can detect features of subjects from the captured image. In addition, the threshold as the lower limit value may be a value set by a user's operation with respect to the camera 100 or the controller 200. In addition, the threshold as the lower limit value may be a value set to secure the image quality of the tracking targets.

If the index for the representative target is equal to or larger than the lower limit value (YES in Step S306), the processing proceeds to the next step. The control unit 117 calculates the difference between the size calculated by the calculation unit 116 for the tracking target group and a value preset by the user as a target value for the size of the tracking target group in the captured image, and calculates the quantity of zooming control in accordance with the calculated difference (Step S307). In this case, the control unit 117 determines whether the drive unit 109 is caused to perform zooming-in or zooming-out such that the calculated difference is reduced. In addition, the control unit 117 determines the zooming speed such that the zooming speed increases as the calculated difference becomes larger. In this case, zooming is controlled such that the size calculated for the tracking target group approaches the target value.

Even if the magnitude of the calculated difference is the same, the control unit 117 may vary the zooming speed in the cases in which the drive unit 109 is caused to perform zooming-in and zooming-out. Particularly, the control unit 117 may set a higher zooming speed in the case in which the drive unit 109 is caused to perform zooming-out than in the case in which the drive unit 109 is caused to perform zooming-in. In this case, tracking responsiveness of the camera 100 with respect to spread of the tracking target group is improved.

In addition, if the camera 100 tracks the tracking target group and captures an image of it, the movement speed of targets to be tracked may be higher than that in the case in which the camera 100 tracks a single tracking target and captures an image of it so that high-speed zooming may be required. Hence, the control unit 117 may vary the zooming speed in the case in which the camera 100 tracks the tracking target group and captures an image of it and in the case in which the camera 100 tracks a single tracking target and captures an image of it. Particularly, if the camera 100 tracks the tracking target group and captures an image of it, the control unit 117 may set a higher zooming speed than that in the case in which the camera 100 tracks a single tracking target and captures an image of it.

In addition, if the index for the representative target is smaller than the lower limit value (NO in Step S306), the control unit 117 restricts zooming control of the drive unit 109 (Step S308). As a restriction on zooming, for example, the control unit 117 may inhibit the drive unit 109 from performing zooming. In addition, as a restriction on zooming, the control unit 117 may set a lower zooming speed or set a shorter time for zooming than that in the case in which zooming is not restricted. In addition, specifically, the zooming restricted in Step S308 is zooming-out. That is, in Step S308, the control unit 117 does not have to restrict zooming-in performed by the drive unit 109. However, in Step S308, the control unit 117 may restrict both zooming-in and zooming-out by the drive unit 109.

The control unit 117 compares the reference position calculated by the calculation unit 116 for the tracking target group with the position set by the user as a target for the position of the tracking target group in the captured image, and calculates the quantity of control over panning and tilting in accordance with comparison results (Step S309). In this case, the control unit 117 determines the direction and the speed of panning and tilting such that the reference position calculated for the tracking target group approaches the position set as a target. In addition, the control unit 117 determines the speed of panning and tilting such that the speed of panning and tilting increases as a deviation in distance between the reference position calculated for the tracking target group and the position set as a target increases. In this case, panning and tilting are controlled such that the reference position calculated for the tracking target group approaches the target position.

The control unit 117 operates the drive unit 109 based on the details determined in Step S308 or Step S309 and Step S309 (Step S310). More specifically, the control unit 117 gives an instruction for an operation indicating the details determined in Step S308 or Step S309 and Step S309 to the drive unit 109. Accordingly, the drive unit 109 performs operations of panning, tilting, zooming, and the like in accordance with the instruction of the control unit 117.

The tracking processing may be ended if ending conditions are satisfied after the processing of Step S310 is performed. The ending conditions include that an instruction to end the tracking processing has been received from the camera 100 or the controller 200, the date and time has reached a predetermined date and time, a predetermined time has elapsed after the tracking processing has started, and the like. In addition, if the ending conditions are not satisfied, the processing from Step S301 may be repeated targeting on a newly generated captured image.

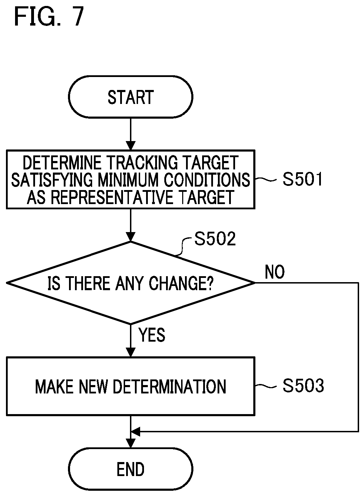

FIG. 7 is a flowchart showing a flow of the determination processing (refer to Step S305 in FIG. 6).

The extraction unit 115 determines, as the representative target, the tracking target satisfying minimum conditions among the plurality of tracking targets extracted in Step S303 of the tracking processing (Step S501). The minimum conditions are predetermined conditions regarding the sizes or the lengths of the tracking targets. In addition, in the present embodiment, the tracking target having the smallest size in the captured image, and the tracking target having the shortest length in the captured image are determined as the minimum conditions. The index as the sizes or the lengths of the tracking targets used by the extraction unit 115 to identify the tracking target satisfying the minimum conditions is the same index as the index used for judgment of Step S306 in the tracking processing.

The extraction unit 115 judges whether or not the index as the size or the length of the representative target has changed from the index determined in the previous determination processing (Step S502).

If the index as the size or the length of the representative target has not changed from the index determined in the previous determination processing (NO in Step S502), the determination processing ends. In this case, the index determined in the previous determination processing is taken over as the index used for judgment of Step S306 in the tracking processing.

In addition, the index as the size or the length of the representative target may change from the index determined in the previous determination processing (YES in Step S502). In this case, the extraction unit 115 newly determines the index for the size or the length of the representative target as the index used for judgment of Step S306 in the tracking processing (Step S503).

If the current determination processing is the first determination processing, the extraction unit 115 judges that the index for the size or the length of the representative target has changed from the index determined in the previous determination processing.

In addition, the information indicating the index determined in the determination processing as the index used for judgment of Step S306 in the tracking processing is stored in the storage unit 112 of the camera 100.

In this manner, in the present embodiment, if the size of the smallest tracking target in the captured image or the length of the shortest tracking target in the captured image is equal to or larger than the threshold as the lower limit value, both zooming-in and zooming-out in zooming of the camera 100 are performed without any restriction. Further, if the size of the smallest tracking target in the captured image or the length of the shortest tracking target in the captured image is smaller than the threshold as the lower limit value, zooming-out of the camera 100 is restricted.

In this case, compared to a case in which zooming-out of the camera 100 is not restricted regardless of the sizes or the lengths of the tracking targets, occurrence of a tracking target which becomes small in the captured image to the extent that it is not detected by the camera 100 is curbed. For this reason, while tracking each of the plurality of detected tracking targets, the camera 100 can perform zooming-out such that they are included within the angle of view of the tracking target group.

In addition, the present embodiment has described an example in which image capturing control is performed on the basis of the sizes or the lengths of all the tracking targets, but it is not limited to this, and image capturing control may be performed based on the sizes of some of the tracking targets. For example, image capturing control may be performed on the basis of only a representative subject or subjects similar thereto, for example, tracking targets having a higher priority, such as subjects which have been personally authenticated. That is, zooming-out of the camera 100 is restricted if the sizes or the lengths of these tracking targets having a relatively higher priority are smaller than the threshold as the lower limit value, that is, smaller than the reference value. At this time, other tracking targets having a relatively lower priority may have a size smaller than the reference value.

In addition, the way of determining a plurality of subjects to be tracking targets is not limited to the form introduced above, and other methods may be adopted. For example, main subject judgment processing may be performed based on detection of particular subjects such as persons (face, head) or animals, the positions or the sizes of the subjects within the angle of view detected using personal authentication or the like, or a user's selection. The selected main subject may be set as the tracking target, and subjects which are present in the vicinity of it within a prescribed distance range and detected by the same particular subject detection processing may be collectively grouped as a group and set as the tracking targets.

### (Variation)

Next, a variation of the tracking processing will be described. The tracking processing of the present embodiment is not limited to that shown in FIG. 6.

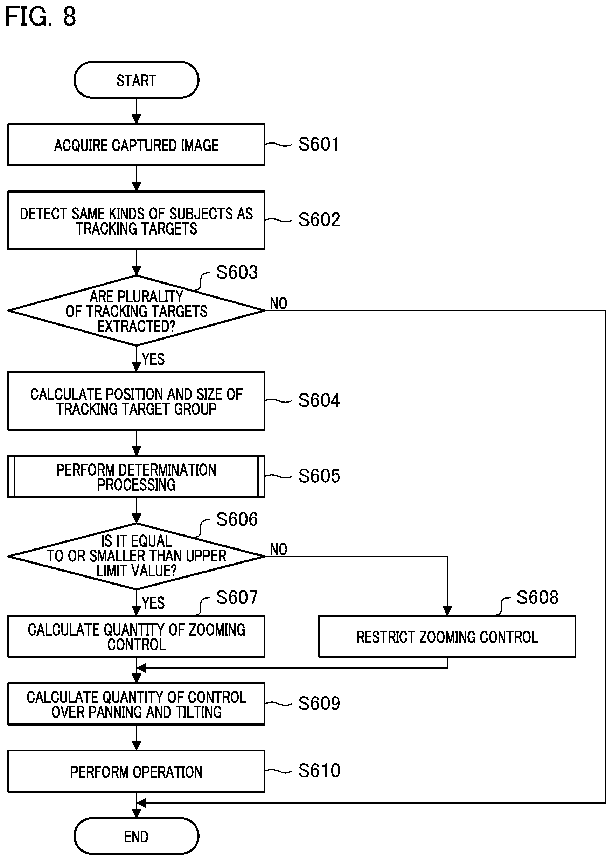

FIG. 8 is a flowchart showing another flow of the tracking processing as a variation. The processing of Steps S601 to S604 in the tracking processing shown in FIG. 8 is the same processing as the processing of Steps S301 to S304 in the tracking processing shown in FIG. 6.

The extraction unit 115 performs the determination processing (Step S605). Although details will be described below, the technique used for determining the representative target with the extraction unit 115 in the determination processing performed in Step S605 differs from that in the determination processing performed in Step S305 of the tracking processing shown in FIG. 6.

The control unit 117 judges whether or not the index determined in the determination processing as the size or the length of the representative target is equal to or smaller than the threshold predetermined as an upper limit value (Step S606). For example, the control unit 117 may judge whether or not the length in the longitudinal direction of the rectangular image 413 generated for the representative target (refer to FIG. 4A and the like) is equal to or smaller than the threshold as the upper limit value. In addition, for example, the control unit 117 may judge whether or not the area of the region surrounded by the rectangular image 413 generated for the representative target is equal to or smaller than the threshold as the upper limit value. In addition, for example, the control unit 117 may judge whether or not the length of the diagonal connecting two vertices in the rectangular image 413 generated for the representative target is equal to or smaller than the threshold as the upper limit value. That is, the index for the representative target used as the reference for judgment in Step S606 need only be an index allowing a comparison of the size or the length of the representative target.

In addition, for example, the threshold as the upper limit value is the largest size or the longest length at which the detection unit 113 can detect subjects from the captured image. In addition, for example, the threshold as the upper limit value may be a value obtained by subtracting a predetermined size or length from the largest size or the longest length at which the detection unit 113 can detect subjects from the captured image. A predetermined size or length may be any value, but may be a value determined such that detection can be performed by the detection unit 113. In addition, for example, the threshold as the upper limit value may be the largest size or the longest length at which the detection unit 113 can detect the features of the subjects from the captured image. In addition, for example, the threshold as the upper limit value may be a value obtained by subtracting a predetermined size or length from the largest size or the longest length at which the detection unit 113 can detect the features of the subjects from the captured image. In addition, the threshold as the upper limit value may be a value set by a user's operation with respect to the camera 100 or the controller 200. In addition, the threshold as the upper limit value may be a value set to secure the image quality of the tracking targets.

If the index for the representative target is equal to or smaller than the upper limit value, the processing proceeds to Step S607. In addition, the processing of Step S607 is the same processing as the processing of Step S307 in FIG. 6.

In addition, if the index for the representative target is larger than the upper limit value, the control unit 117 restricts zooming control of the drive unit 109 (Step S608). As a restriction on zooming, for example, the control unit 117 may inhibit the drive unit 109 from performing zooming. In addition, as a restriction on zooming, the control unit 117 may set a lower zooming speed or set a shorter time for zooming than that in the case in which zooming is not restricted. In addition, specifically, the zooming restricted in Step S608 is zooming-in. That is, in Step S608, the control unit 117 does not have to restrict zooming-out performed by the drive unit 109. However, in Step S608, the control unit 117 may restrict both zooming-in and zooming-out by the drive unit 109.

In addition, the processing of Step S609 and Step S610 is the same processing as the processing of Step S309 and Step S310 in FIG. 6.

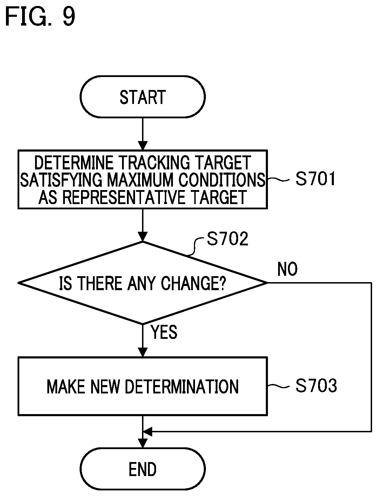

FIG. 9 is a flowchart showing another flow of the determination processing (refer to Step S605 in FIG. 8) as a variation.

The extraction unit 115 determines, as the representative target, the tracking target satisfying maximum conditions among the plurality of tracking targets extracted in Step S303 of the tracking processing (Step S701). The maximum conditions are predetermined conditions regarding the sizes or the lengths of the tracking targets. In addition, in the present embodiment, the tracking target having the largest size in the captured image, and the tracking target having the longest length in the captured image are determined as the maximum conditions. The index as the sizes or the lengths of the tracking targets used by the extraction unit 115 to identify the tracking target satisfying the maximum conditions is the same index as the index used for judgment of Step S606 in the tracking processing.

The extraction unit 115 judges whether or not the index for the size or the length of the representative target has changed from the index determined in the previous determination processing (Step S702).

If the index for the size or the length of the representative target has not changed from the index determined in the previous determination processing (NO in Step S702), the determination processing ends. In this case, the index determined in the previous determination processing is taken over as the index used for judgment of Step 706 in the tracking processing.

In addition, the index for the size or the length of the representative target may change from the index determined in the previous determination processing (YES in Step S702). In this case, the extraction unit 115 newly determines the index for the size or the length of the representative target as the index used for judgment of Step S606 in the tracking processing (Step S703).

If the current determination processing is the first determination processing, the extraction unit 115 judges that the index for the size or the length of the representative target has changed from the index determined in the previous determination processing.

In addition, the information indicating the index determined in the determination processing as the index used for judgment of Step S606 in the tracking processing is stored in the storage unit 112 of the camera 100.

In this manner, in the present embodiment, if the size of the largest tracking target in the captured image or the length of the longest tracking target in the captured image is equal to or smaller than the threshold as the upper limit value, both zooming-in and zooming-out in zooming control of the camera 100 are freely performed. Further, if the size of the largest tracking target in the captured image or the length of the longest tracking target in the captured image is larger than the threshold as the upper limit value, zooming-in of the camera 100 is restricted.

In this case, compared to a case in which zooming-in of the camera 100 is not restricted regardless of the sizes or the lengths of the tracking targets, occurrence of a tracking target which becomes large in the captured image to the extent that it is not detected by the camera 100 is curbed. For this reason, while tracking each of the plurality of detected tracking targets, the camera 100 can perform zooming-out such that they are included within the angle of view of the tracking target group.

### Second embodiment

Next, the image capturing system 1 of a second embodiment will be described. For the image capturing system 1 of the second embodiment, constitutions different from those of the image capturing system 1 of the first embodiment will be described, and description of the same constitutions as those of the image capturing system 1 of the first embodiment will be omitted.

If the tracking conditions are satisfied, the control unit 117 of the camera 100 of the present embodiment controls zooming by the drive unit 109, and if the tracking conditions are not satisfied, it restricts zooming by the drive unit 109. The tracking conditions are conditions used by the control unit 117 to judge whether or not the camera 100 can track individual tracking targets even if the drive unit 109 has performed zooming. The tracking conditions will be described below in detail.

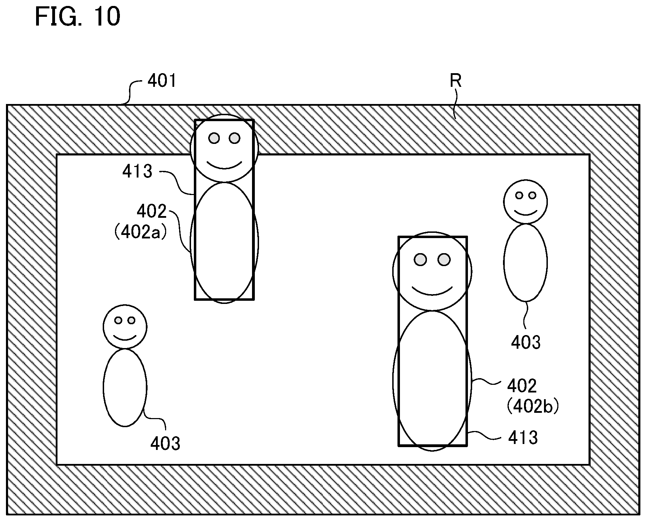

FIG. 10 is an explanatory view of a relationship between regions where the tracking targets 402 are positioned in the captured image 401 and a restriction on zooming-in by the camera 100.

In the captured image 401 shown in FIG. 10, a plurality of tracking targets 402 constituted of the tracking target 402a and the tracking target 402b and a plurality of non-tracking targets 403 are shown.

In the present embodiment, in the captured image 401, a region determined as a restricted region R is present. The restricted region R is a region in which zooming-in by the camera 100 is restricted if the tracking targets 402 are positioned. The restricted region R may be any region. However, in the shown example, it is a region indicated by diagonal lines as a circumferential edge portion in the captured image 401.

In the case in which the tracking targets 402 are positioned in the restricted region R, if zooming-in is performed by the camera 100, the tracking targets 402 may be cut off from the captured image 401 or the tracking targets 402 may not be shown in the captured image 401. In addition, when the tracking targets 402 are cut off from the captured image 401, or when the tracking targets 402 are not shown in the captured image 401, since the tracking targets 402 are no longer detected by the detection unit 113, it becomes difficult for the camera 100 to track the tracking targets 402. Hence, in the present embodiment, a region which may no longer be detected by the camera 100 if zooming-in is performed by the camera 100 is determined as the restricted region R. Further, one of the determined tracking conditions is that the region detected by the detection unit 113 as the position of each of the plurality of tracking targets is not included in the restricted region R. In the shown example, since a part of the rectangular image 413 corresponding to the tracking target 402a is included in the restricted region R, the tracking conditions are not satisfied.

The tracking conditions may include that no part of the rectangular image 413 for each tracking target 402 is included in the restricted region R. In addition, the tracking conditions may include that a part of the rectangular image 413 for each tracking target 402 occupying a predetermined ratio or more is not included in the restricted region R. The predetermined ratio may be any ratio, but it is half, for example.

In addition, the tracking condition determined for the relationship between the region detected by the detection unit 113 as the position of each of the plurality of tracking targets and the restricted region R is a tracking condition applied if the control unit 117 causes the drive unit 109 to perform zooming-in. That is, if the control unit 117 causes the drive unit 109 to perform zooming-out, the tracking condition determined for the relationship between the region detected by the detection unit 113 as the position of each of the plurality of tracking targets and the restricted region R does not have to be applied. In other words, the control unit 117 may cause the drive unit 109 to perform zooming-out regardless of whether or not the tracking condition determined for the relationship between the region detected by the detection unit 113 as the position of the tracking target and the restricted region R is satisfied.

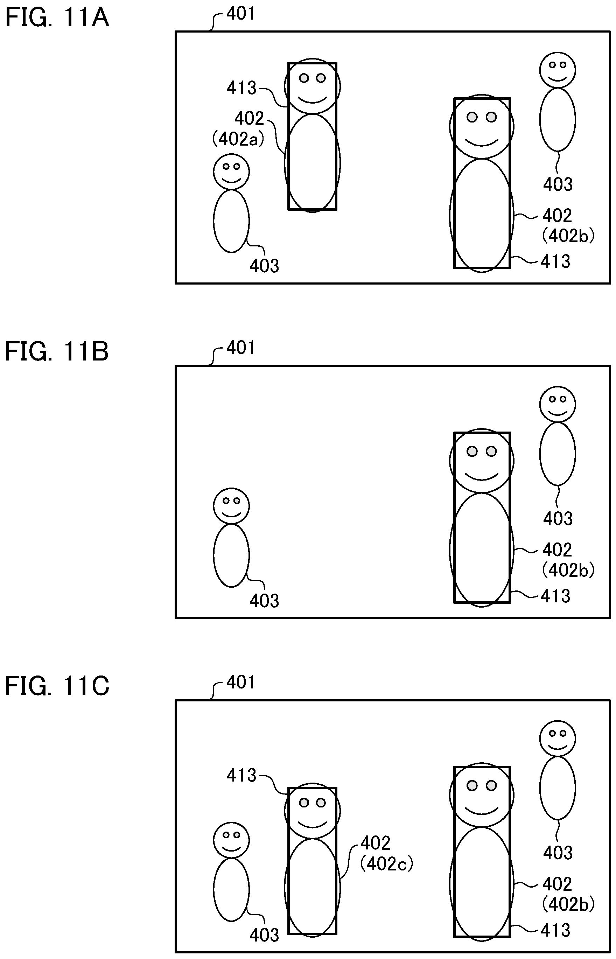

FIGS. 11A to 11C are explanatory views of a relationship between the presence or absence of detection of the tracking targets 402 in the captured image 401 by the detection unit 113 and a restriction on zooming by the camera 100.

In the captured image 401 shown in FIG. 11A, the plurality of tracking targets 402 constituted of the tracking target 402a and the tracking target 402b are shown. In this case, it is assumed that the number of tracking targets 402 detected by the detection unit 113 from the captured image 401 shown in FIG. 11A is "two" including the tracking target 402a and the tracking target 402b.

Here, it is assumed that the captured image 401 shown in FIG. 11B is generated as the next frame of the captured image 401 shown in FIG. 11A. In the captured image 401 shown in FIG. 11B, the tracking target 402b is shown, whereas the tracking target 402a (refer to FIG. 11A) is not shown. Further, in the present embodiment, one of the determined tracking conditions is that the number of people, that is, a plurality of tracking targets extracted by the extraction unit 115 has not decreased.

In the example shown in FIG. 11B, the number of tracking targets 402 extracted by the extraction unit 115 from the captured image 401 is "one", which is the only tracking target 402b. In this case, since the number of people, that is, tracking targets extracted by the extraction unit 115 has decreased, the tracking conditions are not satisfied.

In addition, it is assumed that the captured image 401 shown in FIG. 11C is generated as the next frame of the captured image 401 shown in FIG. 11A. In the captured image 401 shown in FIG. 11C, the tracking target 402b is shown, whereas the tracking target 402a (refer to FIG. 11A) is not shown. In addition, in the captured image 401 shown in FIG. 11C, the tracking target 402c is newly shown. Further, in the present embodiment, one of the determined tracking conditions is that the tracking targets 402 detected by the extraction unit 115 in the first captured image 401 is also extracted by the extraction unit 115 in the second captured image 401 which is captured at a time later than the first captured image 401.

In the example shown in FIG. 11C, since the number of tracking targets 402 extracted by the extraction unit 115 from the captured image 401 is "two" including the tracking target 402b and the tracking target 402c, the number of people, that is, tracking targets extracted by the extraction unit 115 has not decreased. On the other hand, since the tracking target 402a which has been extracted in the captured image 401 shown in FIG. 11A is not extracted in the captured image 401 shown in FIG. 11C, the tracking conditions are not satisfied.

In addition, although it is not shown, one of the determined tracking conditions is that the size or the length of each of the plurality of tracking targets 402 extracted by the extraction unit 115 is equal to or larger than the threshold predetermined as the lower limit value. This threshold as the lower limit value is a threshold used for judgment of Step S306 in the tracking processing shown in FIG. 6. In addition, one of the determined tracking conditions is that the index regarding the size or the length of each of the plurality of tracking targets 402 extracted by the extraction unit 115 is equal to or smaller than the threshold predetermined as the upper limit value. This threshold as the upper limit value is a threshold used for judgment of Step S606 in the tracking processing shown in FIG. 8.

In this manner, in the present embodiment, a plurality of conditions are determined as the tracking conditions. Further, if all the plurality of conditions determined as the tracking conditions are satisfied, the control unit 117 controls zooming by the drive unit 109. In addition, if at least one of the plurality of conditions determined as the tracking conditions is not satisfied, the control unit 117 restricts some of zooming operations by the drive unit 109.

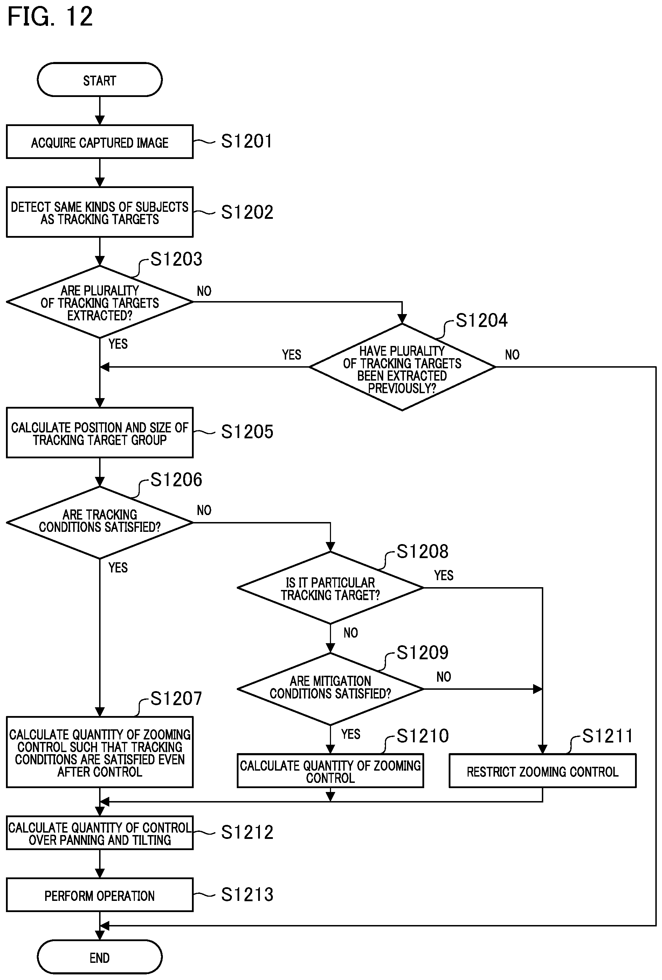

FIG. 12 is a flowchart showing another flow of the tracking processing of the second embodiment. The processing of Steps S1201 to S1203 in the tracking processing shown in FIG. 12 is the same processing as the processing of Steps S301 to S303 in the tracking processing shown in FIG. 6.

If a plurality of tracking targets have not extracted from the captured image (NO in Step S1203), the extraction unit 115 judges whether or not a plurality of tracking targets have been extracted from the captured image in the previous tracking processing (Step S1204). The captured image which is a target of judging whether or not a plurality of tracking targets have been extracted in the previous tracking processing is a captured image generated by image capturing at a time before the captured image which is a target of judging whether or not a plurality of tracking targets have been extracted in the current tracking processing.

Even in the previous tracking processing, if a plurality of tracking targets are not extracted from the captured image (NO in Step S1204), the tracking processing ends. If no tracking targets are extracted in the current tracking processing, control of the drive unit 109 by the control unit 117 is not performed. In addition, if only a single tracking target is extracted in the current tracking processing, the control unit 117 causes the drive unit 109 to perform operations of panning, tilting, and zooming so as to track the extracted single tracking target.

In addition, if a plurality of tracking targets are extracted from the captured image in the current tracking processing (YES in Step S1203), or if a plurality of tracking targets are extracted from the captured image in the previous tracking processing (YES in Step S1204), the processing proceeds to Step S1205. The processing of Step S1205 is the same processing as the processing of Step S304 in the tracking processing shown in FIG. 6.

The control unit 117 judges whether or not the tracking conditions are satisfied (Step S1206). More specifically, the control unit 117 judges whether or not all the plurality of conditions described above have been satisfied as the tracking conditions.

If the tracking conditions are satisfied (YES in Step S1206), the control unit 117 calculates the quantity of zooming control in accordance with the difference between the size calculated by the calculation unit 116 for the tracking target group and a value preset by the user as a target value for the size of the tracking target group in the captured image. In addition, at this time, the control unit 117 calculates the quantity of zooming control such that the tracking conditions are satisfied even after zooming control by the drive unit 109 (Step S1207). More specifically, if the position of each tracking target constituting the tracking target group does not change, the control unit 117 calculates the quantity of zooming control such that the tracking conditions are satisfied even after zooming of the drive unit 109 is performed based on the quantity of control calculated in Step S1207. In addition, the case in which the position of each tracking target constituting the tracking target group does not change denotes a case in which the position of each tracking target constituting the tracking target group does not change before and after zooming of the drive unit 109 is performed based on the quantity of control calculated in Step S1207.

In addition, if the tracking conditions are not satisfied (NO in Step S1206), the control unit 117 judges whether or not a tracking target which is a target not satisfying the tracking conditions is a particular tracking target (Step S1208). A particular tracking target is a predetermined tracking target of the tracking targets set in Step S107 in FIG. 5. A particular tracking target may be any tracking target, but it is a tracking target determined to be of high importance for tracking, for example. In addition, a particular tracking target may be set by a user's operation of the camera 100 or the controller 200, or may be set by the detection unit 113 of the camera 100 or the target setting unit 213 of the controller 200.

If the tracking target which is a target not satisfying the tracking conditions is not a particular tracking target (NO in Step S1208), the control unit 117 judges whether or not mitigation conditions are satisfied (Step S1209). The mitigation conditions are conditions used by the control unit 117 to judge whether or not restriction on zooming by the drive unit 109 is mitigated. The mitigation conditions include that a predetermined time has elapsed after zooming by the drive unit 109 has started in a state in which the tracking conditions are not satisfied. In addition, the mitigation conditions include that a user's operation of the camera 100 or the controller 200 to instruct restriction on zooming by the drive unit 109 has not been performed. In addition, the mitigation conditions include that the distance from the region detected by the detection unit 113 as the position of the tracking target not satisfying the tracking conditions to the reference position of the tracking target group is equal to or longer than a predetermined distance. In addition, the mitigation conditions include that the detection unit 113 has detected that the tracking target not satisfying the tracking conditions is not moving. The detection unit 113 may identify the presence or absence of movement of the tracking target by comparing a captured image acquired in the tracking processing being executed with a captured image acquired in the previous tracking processing.

If the mitigation conditions are satisfied (YES in Step S1209), the processing proceeds to Step S1210. In addition, the processing of Step S1210 is the same processing as the processing of Step S307 in the tracking processing shown in FIG. 6.

In addition, if the tracking target which is a target not satisfying the tracking conditions is a particular tracking target (YES in Step S1208), or if the mitigation conditions are not satisfied (NO in Step S1209), the processing proceeds to Step S1211. In addition, the processing of Step S1211 is the same processing as the processing of Step S308 in the tracking processing shown in FIG. 6.

In addition, after Step S1207, Step S1210, or Step S1211, the processing proceeds to Step S1212. In addition, the processing of Step S1212 and Step S1213 is the same processing as the processing of Step S309 and Step S310 in the tracking processing shown in FIG. 6.

As above, the control unit 117 controls zooming of the image capturing unit such that a plurality of tracking targets are included within the angle of view of the image capturing unit. In addition, the control unit 117 controls zooming such that the size of each tracking target among at least some of the plurality of tracking targets falls within a predetermined range. The size of the tracking target includes the size detected by the detection unit 113 as the size or the length of the tracking target. In addition, the predetermined range includes a range or the like which is equal to or larger than the threshold as the lower limit value and equal to or smaller than the threshold as the upper limit value.

In this case, compared to the constitution in which zooming is performed without controlling the size of each tracking target, occurrence of a plurality of detected tracking targets becoming undetectable after zooming is curbed. For this reason, it is possible to control the image capturing unit such that a plurality of detected tracking targets are included within the angle of view of the image capturing unit while the image capturing unit is caused to track each of the plurality of tracking targets.

In addition, a process in which the image capturing system 1 sets a plurality of tracking targets to be tracked during image capturing using the camera 100 can also be regarded as setting. In addition, a process in which the image capturing system 1 detects the sizes of the tracking targets in an image captured by the camera 100 can also be regarded as size detecting. In addition, a process in which the image capturing system 1 controls zooming of the camera 100 such that a plurality of tracking targets are included within the angle of view of the image capturing unit can also be regarded as controlling. In this controlling, the zooming is controlled such that the size of each tracking target among at least some of the plurality of tracking targets falls within the predetermined range.

In addition, the function of the image capturing system 1 setting a plurality of tracking targets to be tracked during image capturing by the camera 100 can also be regarded as a setting function. In addition, the function of the image capturing system 1 detecting the sizes of the tracking targets in an image captured by the camera 100 can also be regarded as a size detecting function. In addition, the function of the image capturing system 1 controlling zooming of the image capturing unit such that a plurality of tracking targets are included within the angle of view of the image capturing unit can also be regarded as a controlling function. This controlling function controls zooming such that the size of each tracking target among at least some of the plurality of tracking targets falls within the predetermined range.

The image used for detecting a plurality of tracking targets is not limited to a captured image.

For example, if the detection unit 113 has detected a subject from a captured image, an image processed based on the captured image may be generated, by generating an image in which information related to the detected subject is superimposed on the captured image. In this case, the extraction unit 115 may detect a plurality of tracking targets from an image generated by the detection unit 113. In this manner, an image generated by processing a captured image is also included in images generated on the basis of image capturing by the image capturing unit.

In addition, if the size of each tracking target among at least some of the plurality of tracking targets exceeds the threshold as the upper limit value, the control unit 117 restricts zooming-in of zooming. In this case, compared to the constitution in which zooming-in of zooming is performed regardless of the size of each tracking target, a situation in which the plurality of tracking targets are no longer detected after zooming-in is curbed.

In addition, if the size of each tracking target among at least some of the plurality of tracking targets falls below the threshold as the lower limit value, the control unit 117 restricts zooming-out of zooming. In this case, compared to the constitution in which zooming-out of zooming is performed regardless of the size of each tracking target, a situation in which the plurality of tracking targets are no longer detected after zooming-out is curbed.

In addition, the detection unit 113 detects particular subjects from the captured image. Further, the extraction unit 115 sets tracking targets from the subjects detected by the detection unit 113. In this case, the tracking targets can be tracked from when the tracking targets are set.

In addition, as described above, the predetermined range described above is determined from the size or the length at which the detection unit 113 can detect subjects, or a value obtained by adding or subtracting a predetermined size with respect to the size in which the detection unit 113 can detect subjects. That is, the predetermined range has been determined in relation to detection capabilities of the detection unit 113. In this case, if a tracking target group is tracked, a situation in which zooming to a size in which each of the plurality of tracking targets can no longer be detected is curbed.

In addition, if the predetermined range is a range set by a user's operation with respect to the camera 100 or the controller 200, the image capturing unit can be caused to track and capture an image of a tracking target group in a state in which the sizes of the tracking targets desired by the user are maintained.

In addition, if the number of people, that is, tracking targets extracted by the extraction unit 115 has decreased, or if the tracking targets which have been extracted by the extraction unit 115 are no longer extracted, the control unit 117 restricts zooming. In other words, if each tracking target in the plurality of tracking targets is no longer detected by the detection unit 113, the control unit 117 restricts zooming.

In this case, compared to the constitution in which zooming is performed regardless of whether or not each tracking target is no longer detected by the detection unit 113, a situation in which the plurality of tracking targets are no longer detected after zooming is curbed.

In addition, if the size of the tracking target having the smallest size among the plurality of tracking targets falls below the threshold as the lower limit value, the control unit 117 restricts zooming-out of zooming. The tracking target having the smallest size among the plurality of tracking targets includes the tracking target satisfying the minimum conditions.

In this case, compared to the constitution in which zooming-out of zooming is performed regardless of the size of the tracking target having the smallest size among the plurality of tracking targets, a situation in which the tracking target having the smallest size among the plurality of tracking targets is no longer detected after zooming-out is curbed.

In addition, if the size of the tracking target having the largest size among the plurality of tracking targets exceeds the threshold as the upper limit value, the control unit 117 restricts zooming-in of zooming. The tracking target having the largest size among the plurality of tracking targets includes tracking targets satisfying the maximum conditions.

In this case, compared to the constitution in which zooming-in of zooming is performed regardless of the size of the tracking target having the largest size among the plurality of tracking targets, a situation in which the tracking target having the largest size among the plurality of tracking targets is no longer detected after zooming-in is curbed.

In addition, if the position of each tracking target among at least some of the plurality of tracking targets is not a predetermined position, the control unit 117 restricts zooming-in of zooming. The predetermined position includes positions not included in the restricted region R of the regions shown in the captured image.

In this case, compared to the constitution in which zooming-in of zooming is performed regardless of the position of each tracking target, a situation in which the plurality of tracking targets are no longer detected after zooming-in is curbed.

In addition, if the size of each tracking target among at least some of the plurality of tracking targets does not fall within the predetermined range, the control unit 117 restricts zooming. This restriction includes that the control unit 117 inhibits zooming, the control unit 117 sets a lower zooming speed, or the control unit 117 sets a shorter time of zooming.

In this case, a situation in which image capturing for tracking each of the plurality of tracking targets by the camera 100 can no longer be continued is curbed.

In addition, if the size of each tracking target among at least some of the plurality of tracking targets does not fall within the predetermined range, the control unit 117 restricts zooming. Further, even if the size of each tracking target among at least some of the plurality of tracking targets does not fall within the predetermined range, if the predetermined conditions are satisfied, the control unit 117 does not restrict the zooming. The predetermined conditions include the mitigation conditions. In this case, if the predetermined conditions are satisfied, the camera 100 can be caused to prioritize zooming over tracking of the plurality of tracking targets.

In addition, tracking targets include particular tracking targets. Further, if the size of a particular tracking target does not fall within the predetermined range, the control unit 117 restricts zooming even if the predetermined conditions are satisfied (refer to Steps S1208 and S1211 in FIG. 12 and the like). In this case, if the predetermined conditions are satisfied, the camera 100 can be caused to prioritize tracking of a particular tracking target over zooming.

Even if a negative result is obtained in Step S306 (NO in Step S306) in FIG. 6, or even if a negative result is obtained in Step S606 (NO in Step S606) in FIG. 8, if the mitigation conditions are satisfied, the control unit 117 does not have to restrict zooming. In addition, if a negative result is obtained in Step S306 (NO in Step S306) in FIG. 6, or if a negative result is obtained in Step S606 (NO in Step S606) in FIG. 8, the detection results by the detection unit for a particular tracking target may not satisfy the tracking conditions. In this case, the control unit 117 may restrict zooming regardless of whether or not the mitigation conditions are satisfied.

In addition, as described above, it has been described that there are a plurality of conditions as the tracking conditions, but it is not limited to this. Regarding the tracking conditions, any one or a plurality of conditions of the plurality of conditions described above need only be the tracking conditions.

In addition, zooming control or a restriction on zooming by the control unit 117 does not affect the non-tracking targets. For example, even if the detection results by the detection unit 113 for the non-tracking targets do not satisfy the tracking conditions, if the detection results by the detection unit for each of the plurality of tracking targets satisfy the tracking conditions, the control unit 117 does not restrict zooming by the drive unit 109.

In addition, in the present disclosure, it has been described that the controller 200 sets which subjects are to be the tracking targets, but it is not limited to this. For example, the camera 100 may set which subjects are to be the tracking targets. That is, the camera 100 may have the function of the target setting unit 213 of the controller 200.

In addition, in the present disclosure, it has been described that the camera 100 performs processing, such as detecting an index related to subjects, extracting tracking targets, and whether or not to restrict zooming by the drive unit 109, but it is not limited to this. For example, the controller 200 may perform processing, such as detecting an index related to subjects, extracting tracking targets, and whether or not to restrict zooming by the drive unit 109. That is, the controller 200 may have the functions of the detection unit 113 of the camera 100, the extraction unit 115, the calculation unit 116, and the control unit 117.

In addition, the present disclosure also includes a case in which a software program for realizing the functions of each of the foregoing embodiments is supplied to a system or a device having a computer capable of executing a program directly from a recording medium or using wired/wireless communication and the program is executed.

Therefore, a program code itself, which is supplied to a computer and installed therein in order to realize the foregoing functional processing of the present disclosure with this computer, also realizes the present disclosure. Namely, the present disclosure also includes a computer program itself for realizing the function processing of the present disclosure. In this case, as long as it functions as a program, the program may be in any form, such as a subject code, a program executed by an interpreter, or script data supplied to an OS. For example, a recording medium for supplying a program may be a hard disk, a magnetic recording medium such as a magnetic tape, an optical/magneto-optical storage medium, or a non-volatile semiconductor memory. In addition, regarding a method for supplying a program, it is also possible to consider a method in which a computer program forming the present disclosure is stored in a server on a computer network and a connected client computer downloads the computer program and programs it.

Embodiment(s) of the present disclosure can also be realized by a computer of a system or apparatus that reads out and executes computer executable instructions (e.g., one or more programs) recorded on a storage medium (which may also be referred to more fully as a "non-transitory computer-readable storage medium") to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

In addition, an OS or the like operating in a computer may perform a part or all of actual processing on the basis of instructions in the program code, and each of the functions of the embodiments described above may be realized by the processing. Moreover, a program code read from a storage medium may be written in a function extension board inserted into a computer or a memory provided in a function extension unit connected to a computer. Further, on the basis of instructions in the program code, a CPU or the like provided in the function extension board or the function extension unit may perform a part or all of actual processing. Even in this case, each of the functions of each of the embodiments described above is realized.

While the present disclosure has been described with reference to embodiments, it is to be understood that the disclosure is not limited to the disclosed embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives, and equivalents falling within the scope of the appended claims.

This application is a divisional application of European patent application no. 25 194 527.5 (the "parent application"), also published as EP 4 704 434. Based on the original claims of this parent application, the following aspects are repeated below in the present specification and form part of the content of this divisional application as filed.

An information processing device according to a first aspect of the present disclosure comprises setting means for setting a plurality of tracking targets to be tracked during image capturing by image capturing means; size detection means for detecting sizes of the tracking targets in an image captured by the image capturing means ; and control means for controlling zooming of the image capturing means such that the plurality of tracking targets are included within an angle of view of the image capturing means, wherein the control means controls the zooming such that the size of each tracking target among at least some of the plurality of tracking targets falls within a predetermined range.

An information processing device according to a second aspect of the present disclosure is the information processing device according to aspect 1, wherein the control means restricts zooming-in of the zooming if the size of each tracking target among at least some of the plurality of tracking targets exceeds a threshold as an upper limit value.

An information processing device according to a third aspect of the present disclosure is the information processing device according to one of aspects 1 or 2, wherein the control means restricts zooming-out of the zooming if the size of each tracking target among at least some of the plurality of tracking targets falls below a threshold as a lower limit value.

An information processing device according to a fourth aspect of the present disclosure is the information processing device according to aspect 3, wherein the threshold as the lower limit value is a value set by a user's operation.

An information processing device according to a fifth aspect of the present disclosure is the information processing device according to any of aspects 1 to 3 further comprising subject detection means for detecting particular subjects from the captured image, wherein the control means sets the tracking targets from the subjects detected by the subject detection means.

An information processing device according to a sixth aspect of the present disclosure is the information processing device according to aspect 4 or 5 wherein the control means restricts the zooming if each tracking target is no longer detected by the subject detection means among the plurality of tracking targets.

An information processing device according to a seventh aspect of the present disclosure is the information processing device according to any one of aspects 1 to 6, wherein the control means restricts zooming-out of the zooming if the size of a tracking target having the smallest size among the plurality of tracking targets falls below a threshold as a lower limit value.

An information processing device according to a eighth aspect of the present disclosure is the information processing device according to any one of aspects 1 to 7, wherein the control means restricts zooming-in of the zooming if the size of a tracking target having the largest size among the plurality of tracking targets exceeds a threshold as an upper limit value.

An information processing device according to a ninth aspect of the present disclosure is the information processing device according to any one of aspects 1 to 8 further comprising position detection means for detecting positions of the tracking targets in the captured image, wherein the control means restricts zooming-in of the zooming if the position of each tracking target is not a predetermined position among at least some of the plurality of tracking targets.

An information processing device according to a tenth aspect of the present disclosure is the information processing device according to any one of aspects 1 to 9, wherein the control means restricts the zooming if the size of each tracking target among at least some of the plurality of tracking targets does not fall within the range, and wherein the restriction includes that the zooming is inhibited by the control means, the control means lowers a zooming speed, or the control means shortens a time of the zooming.

An information processing device according to an eleventh aspect of the present disclosure is the information processing device according to any one of aspects 1 to 10, wherein the control means restricts the zooming if the size of each tracking target among at least some of the plurality of tracking targets does not fall within the range, and wherein the control means does not impose the restriction if predetermined conditions are satisfied even if the size of each tracking target among at least some of the plurality of tracking targets does not fall within the range.

An information processing device according to a twelfth aspect of the present disclosure is the information processing device according to aspect 11, wherein the tracking targets include a particular tracking target, and wherein the control means imposes the restriction even if the predetermined conditions are satisfied if the size of the particular tracking target does not fall within the range.

An information processing device according to a thirteenth of the present disclosure aspect is the information processing device according to any one of aspects 1 to 12, wherein the zooming is controlled such that a zooming speed in the case in which the image capturing device is caused to perform zooming-out is higher than a zooming speed in the case in which the image capturing device is caused to perform zooming-in.

An information processing device according to a fourteenth of the present disclosure aspect comprises setting means for setting a plurality of tracking targets to be tracked during image capturing by the image capturing means; and control means for controlling zooming of the image capturing means such that the plurality of tracking targets are included within an angle of view of the image capturing means, wherein the control means controls the zooming such that a zooming speed in the case in which the image capturing means is caused to perform zooming-out is higher than a zooming speed in the case in which the image capturing means is caused to perform zooming-in.

An information processing device according to a fifteenth of the present disclosure aspect comprises setting means for setting a plurality of tracking targets to be tracked during image capturing by the image capturing means; size detection means for detecting sizes of the tracking targets in an image captured by the image capturing means; and control means for controlling zooming of the image capturing means such that the plurality of tracking targets are included within an angle of view of the image capturing means, wherein the control means restricts zooming-out of the zooming if the size of each tracking target among at least some of the plurality of tracking targets falls below a threshold as a lower limit value, and wherein the threshold as the lower limit value is a value set by a user's operation.

A method of controlling an information processing device according to a sixteenth aspect of the present disclosure comprises a setting step of setting a plurality of tracking targets to be tracked during image capturing by image capturing means; a size detection step of detecting sizes of the tracking targets in an image captured by the image capturing means; and a control step of controlling zooming of the image capturing means such that the plurality of tracking targets are included within an angle of view of the image capturing means, wherein in the control step the zooming is controlled such that the size of each tracking target among at least some of the plurality of tracking targets falls within a predetermined range.

A method for controlling an information processing device according to a seventeenth aspect of the present disclosure comprises a setting step of setting a plurality of tracking targets to be tracked during image capturing by the image capturing means; and a control step of controlling zooming of the image capturing means such that the plurality of tracking targets are included within an angle of view of the image capturing means, wherein in the control step the zooming is controlled such that a zooming speed in the case in which the image capturing means is caused to perform zooming-out is higher than a zooming speed in the case in which the image capturing means is caused to perform zooming-in.

A non-transitory recording medium storing a control program of an information processing device according to an eighteenth aspect of the present disclosure, causes a computer to perform each step of a method of controlling the imaging device, the method comprises a setting step of setting a plurality of tracking targets to be tracked during image capturing by image capturing means; a size detection step of detecting sizes of the tracking targets in an image captured by the image capturing means; and a control step of controlling zooming of the image capturing means such that the plurality of tracking targets are included within an angle of view of the image capturing means, wherein in the control step the zooming is controlled such that the size of each tracking target among at least some of the plurality of tracking targets falls within a predetermined range.

A non-transitory recording medium storing a control program of an information processing device according to a nineteenth aspect of the present disclosure, causes a computer to perform each step of a method of controlling the imaging device, the method comprises a setting step of setting a plurality of tracking targets to be tracked during image capturing by the image capturing means; and a control step of controlling zooming of the image capturing means such that the plurality of tracking targets are included within an angle of view of the image capturing means, wherein in the control step the zooming is controlled such that a zooming speed in the case in which the image capturing means is caused to perform zooming-out is higher than a zooming speed in the case in which the image capturing means is caused to perform zooming-in.

## Claims

1. An information processing device (1) comprising:
setting means (213) for setting a plurality of tracking targets (402) to be tracked during image capturing by image capturing means (100);
size detection means (113) for detecting sizes of the tracking targets (402) in an image (401) captured by the image capturing means (100); and
control means (117) for controlling zooming of the image capturing means (100) such that the plurality of tracking targets (402) are included within an angle of view of the image capturing means (100),
wherein the control means controls the zooming such that the size of each tracking target among at least some of the plurality of tracking targets (402) falls within a predetermined range,
wherein the control means restricts the zooming if the size of each tracking target among at least some of the plurality of tracking targets does not fall within the range,
wherein the control means does not impose the restriction if predetermined conditions are satisfied even if the size of each tracking target among at least some of the plurality of tracking targets does not fall within the range,
wherein the tracking targets include a particular tracking target, and
wherein the control means imposes the restriction even if the predetermined conditions are satisfied if the size of the particular tracking target does not fall within the range.

2. The information processing device according to claim 1,
wherein the control means restricts zooming-in of the zooming if the size of each tracking target among at least some of the plurality of tracking targets exceeds a threshold as an upper limit value.

3. The information processing device according to claim 1 or 2,
wherein the control means restricts zooming-out of the zooming if the size of each tracking target among at least some of the plurality of tracking targets falls below a threshold as a lower limit value.

4. The information processing device according to claim 3,
wherein the threshold as the lower limit value is a value set by a user's operation.

5. The information processing device according to any one of claims 1 to 3 further comprising:
subject detection means (113) for detecting particular subjects from the captured image,
wherein the control means sets the tracking targets from the subjects detected by the subject detection means.

6. The information processing device according to claim 4 or 5,
wherein the control means restricts the zooming if each tracking target is no longer detected by the subject detection means among the plurality of tracking targets.

7. The information processing device according to any one of claims 1 to 6,
wherein the control means restricts zooming-out of the zooming if the size of a tracking target having the smallest size among the plurality of tracking targets falls below a threshold as a lower limit value.

8. The information processing device according to any one of claims 1 to 7,
wherein the control means restricts zooming-in of the zooming if the size of a tracking target having the largest size among the plurality of tracking targets exceeds a threshold as an upper limit value.

9. The information processing device according to any one of claims 1 to 8 further comprising:
position detection means (113) for detecting positions of the tracking targets in the captured image,
wherein the control means restricts zooming-in of the zooming if the position of each tracking target is not a predetermined position among at least some of the plurality of tracking targets.

10. The information processing device according to any one of claims 1 to 9,
wherein the control means restricts the zooming if the size of each tracking target among at least some of the plurality of tracking targets does not fall within the range, and
wherein the restriction includes that the zooming is inhibited by the control means, the control means lowers a zooming speed, or the control means shortens a time of the zooming.

11. The information processing device (1) according to claim 1
wherein the control means restricts zooming-out of the zooming if the size of each tracking target among at least some of the plurality of tracking targets falls below a threshold as a lower limit value, and
wherein the threshold as the lower limit value is a value set by a user's operation.

12. The information processing device (1) according to any one of claims 1 to 11,
wherein the predetermined conditions are mitigation conditions used to judge whether or not restriction on zooming is mitigated.

13. The information processing device (1) according to claim 12,
wherein the mitigation conditions include that a predetermined time has elapsed after zooming has started in a state in which tracking conditions are not satisfied.

14. The information processing device (1) according to claim 12 or 13, wherein the mitigation conditions include that a user's operation of image capturing means (100) to instruct restriction on zooming has not been performed.

15. The information processing device (1) according to any one of claim 12 to 14,
wherein the mitigation conditions include that the distance from a position of each tracking target among at least some of the plurality of tracking targets not satisfying tracking conditions to a reference position of the plurality of tracking targets is equal to or longer than a predetermined distance.

16. The information processing device (1) according to any one of claim 12 to 15
wherein the mitigation conditions include that each tracking target among at least some of the plurality of tracking targets not satisfying tracking conditions is not moving.

17. A method of controlling an information processing device (1) comprising:
a setting step of setting a plurality of tracking targets (402) to be tracked during image capturing by image capturing means (100);
a size detection step of detecting sizes of the tracking targets (402) in an image (401) captured by the image capturing means (100); and
a control step of controlling zooming of the image capturing means (100) such that the plurality of tracking targets (402) are included within an angle of view of the image capturing means (100), wherein in the control step
the zooming is controlled such that the size of each tracking target among at least some of the plurality of tracking targets (402) falls within a predetermined range,
the zooming is restricted if the size of each tracking target among at least some of the plurality of tracking targets does not fall within the range,
the restriction is not imposed if predetermined conditions are satisfied even if the size of each tracking target among at least some of the plurality of tracking targets does not fall within the range,
wherein the tracking targets include a particular tracking target, and
wherein in the control step the restriction is imposed even if the predetermined conditions are satisfied if the size of the particular tracking target does not fall within the range.

18. A non-transitory recording medium storing a control program of an information processing device (1), causing a computer to perform each step of a method of controlling the imaging device, the method comprising:
a setting step of setting a plurality of tracking targets (402) to be tracked during image capturing by image capturing means (100);
a size detection step of detecting sizes of the tracking targets (402) in an image (401) captured by the image capturing means (100); and
a control step of controlling zooming of the image capturing means (100) such that the plurality of tracking targets (402) are included within an angle of view of the image capturing means (100), wherein in the control step
the zooming is controlled such that the size of each tracking target among at least some of the plurality of tracking targets (402) falls within a predetermined range,
the zooming is restricted if the size of each tracking target among at least some of the plurality of tracking targets does not fall within the range,
the restriction is not imposed if predetermined conditions are satisfied even if the size of each tracking target among at least some of the plurality of tracking targets does not fall within the range,
wherein the tracking targets include a particular tracking target, and
wherein in the control step the restriction is imposed even if the predetermined conditions are satisfied if the size of the particular tracking target does not fall within the range.
